# EUROPÄISCHE PATENTSCHRIFT

(11) **EP 3 070 390 B1**
(45) Veröffentlichungstag und Bekanntmachung des Hinweises auf die Patenterteilung: **09.08.2017**
(21) Anmeldenummer: 16000502.1
(22) Anmeldetag: 02.03.2016
(51) Int. Cl.: F16L 37/252

(54) **SYSTEM UND VERFAHREN ZUM VERBINDEN VON ROHRELEMENTEN**
SYSTEM AND METHOD FOR CONNECTING TUBULAR ELEMENTS
SYSTEME ET PROCEDE POUR LE RACCORDEMENT D'ELEMENTS DE TUYAUX

(30) Priorität: 17.03.2015 DE 102015003374; 09.05.2015 DE 102015006094
(43) Veröffentlichungstag der Anmeldung: 21.09.2016
(73) Patentinhaber: Hölscher Wasserbau GmbH, 49733 Haren (Ems) (DE)
(72) Erfinder: Stroot, Andreas, 49733 Haren (Ems) (DE)
(74) Vertreter: Dammertz, Ulrich

(56) Entgegenhaltungen:
- DE-A1- 4 041 337
- FR-A- 934 148
- JP-A- H09 257 175
- US-A- 177 729
- US-A- 913 484

## Beschreibung

Die Erfindung betrifft ein System zum Verbinden von zumindest zwei Rohrelementen an ihren einander gegenüberliegenden Stirnseiten, und ein entsprechendes Verfahren hierzu. Des Weiteren betrifft die Erfindung auch ein Verfahren zum Lösen von zwei miteinander verbundenen Rohrelementen.

Herkömmlich ist es bekannt, Rohrleitungen, insbesondere mit einer großen axialen Länge, durch Verwendung einer Mehrzahl von Rohrelementen auszubilden, indem die Rohrelemente mit ihren einander gegenüberliegenden Stirnseiten aneinander befestigt werden. Ein solches Befestigen kann in der Weise erfolgen, dass die Stirnseiten von zwei gegenüberliegenden Rohrelementen ineinandergesteckt werden, wobei die Stirnseiten der Rohrelemente einen unterschiedlichen Durchmesser aufweisen können. Ergänzend oder alternativ ist es möglich, die Stirnseiten von zwei gegenüberliegenden Rohrelementen durch Klemmelemente, z.B. Schellen oder dergleichen, aneinander zu befestigen, wobei diese Klemmelemente einen jeweiligen Umfangsrand der Rohrelemente umschließen und dadurch die Rohrelemente mit ihren Stirnseiten aneinander halten. Die Nachteile einer solchen Technik zum Verbinden von Rohrelementen bestehen in einem hohen manuellen Aufwand und in einem daraus resultierenden großen Zeitbedarf zu dessen Durchführung. Ebenfalls von Nachteil ist, dass sich Rohrelemente nicht mehr ohne weiteres voneinander trennen lassen, nachdem sie mit ihren Stirnseiten aneinander verbunden worden sind.

Aus JP 9-257175 (A) ist das Verbinden von zwei Rohrelementen in Form von "pipes 10a, 10b" bekannt, nämlich mittels einer zusätzlichen Verbindungshülse in Form einer "connection pipe 20". Im Einzelnen sind an den Aussenumfangsflächen der Rohrelemente jeweils Rastnocken ausgebildet, die in Kulissenführungen, die angrenzend an beiden Stirnseiten der Verbindungshülse in dessen Wandung ausgebildet sind, eingreifen können. Ein Verbinden der beiden Rohrelemente 10a, 10b erfolgt dabei durch ein Verdrehen der Verbindungs-hülse in Umfangsrichtung. Ein Verbinden der beiden Rohrelemente ist nach der technischen Lehre gemäß JP 9-257175 (A) ohne die Verwendung der zusätzlichen Verbindungshülse nicht möglich.

Aus US 913 484 A sind ein gattungsgemäßes System mit den im Oberbegriff von Anspruch 1 angegebenen Merkmalen, und ein gattungsgemäßes Verfahren mit den im Oberbegriff von Anspruch 6 angegebenen Merkmalen bekannt. Entsprechend liegt der Erfindung die Aufgabe zugrunde, das Verbinden und Lösen von zwei Rohrelementen, oder einer Mehrzahl von Rohrelementen, mit mechanisch zumindest einfachen Mitteln zu optimieren und zeitsparend auszugestalten.

Die obige Aufgabe wird durch ein System mit den Merkmalen von Anspruch 1, und durch ein Verfahren mit den Merkmalen der Ansprüche 6 und 9 gelöst. Vorteilhafte Weiterbildungen der Erfindung sind in den abhängigen Ansprüchen definiert.

Ein System nach der vorliegenden Erfindung dient zum Verbinden von zumindest zwei Rohrelementen, und weist zumindest ein erstes Rohrelement und ein zweites Rohrelement auf. Das System umfasst zumindest ein Halteelement, das an einer Wandung des ersten Rohrelements angrenzend an einer Stirnseite davon, nämlich an der Innenumfangsfläche des ersten Rohrelements ausgebildet ist, und zumindest eine Kulissenführung, die im Bereich einer Wandung des zweiten Rohrelements angrenzend an einer Stirnseite davon ausgebildet ist. Das erste Rohrelement und das zweite Rohrelement können mit ihren Stirnseiten, an denen jeweils das Halteelement und die Kulissenführung ausgebildet sind, zusammengesteckt werden, wobei das Halteelement formschlüssig mit der Kulissenführung in Eingriff gelangt. Im Einzelnen umfasst die Kulissenführung einen ersten Abschnitt, der angrenzend zur Stirnseite des zweiten Rohrelements offen ist und sich parallel zur Längsachse des zweiten Rohrelements erstreckt, einen zweiten Abschnitt, der an den ersten Abschnitt anschließt und sich schräg zur Längsachse des zweiten Rohrelements erstreckt, und einen dritten Abschnitt, der an den zweiten Abschnitt anschließt und sich quer zur Längsachse des zweiten Rohrelements erstreckt. Der dritte Abschnitt der Kulissenführung weist eine Rastmulde auf, in der das Halteelement verrastet werden kann, wobei das zweite Rohrelement, wenn das Halteelement in der Rastmulde aufgenommen ist, gegen eine selbsttätige Verdrehung relativ zum ersten Rohrelement blockiert und in axialer Richtung bezüglich des ersten Rohrelements festgelegt ist, so dass ein axiales Bewegen der Rohrelemente relativ zueinander und parallel zu deren Längsachse nicht möglich ist. Wenn das Halteelement in der Rastmulde aufgenommen ist, ist zwischen den stirnseitigen Rändern der Rohrelemente im Bereich der Außenumfangsfläche der beiden Rohrelemente eine Nut ausgebildet, wobei in der Nut ein Abstandselement eingebracht ist.

Das erfindungsgemäße System zeichnet sich durch das wesentliche Merkmal aus, dass das Halteelement beim Zusammenstecken des ersten und zweiten Rohrelements bedingt durch den zweiten Abschnitt der Kulissenführung automatisch zum dritten Abschnitt der Kulissenführung gelangt, nachdem es durch den ersten Abschnitt der Kulissenführung, der angrenzend zur Stirnseite des zweiten Rohrelements offen ist, hindurchgetreten ist. Der dritte Abschnitt der Kulissenführung ist dadurch gekennzeichnet, dass er quer zur Längsachse des zweiten Rohrelements verläuft. In Folge dessen ist eine Relativbewegung der beiden Rohrelemente zueinander, d.h. parallel zu deren Längsachse, nicht mehr möglich, sobald das Halteelement beim Zusammenstecken der beiden Rohrelemente in den dritten Abschnitt der Kulissenführung gelangt ist. Hierdurch ist ein unkompliziertes und zeitsparendes Zusammenstecken der beiden Rohrelemente an ihren Stirnseiten gewährleistet. Nach Abschluss dessen ist automatisch eine axiale Fixierung der beiden Rohrelemente zueinander sichergestellt.

Der Einsatz des erfindungsgemäßen Systems ist insbesondere für den Fall vorteilhaft, wenn die genannten Rohrelemente mit ihrer Längsachse jeweils vertikal angeordnet sind. Wenn hierbei ein Rohrelement von oben und koaxial fluchtend zum jeweils anderen Rohrelement abgesenkt wird, ist bereits durch die Gewichtskraft des sich absenkenden Rohrelements sichergestellt, dass wie erläutert das Halteelement formschlüssig mit der Kulissenführung in Eingriff gelangt, und sich anschließend selbsttätig durch den ersten Abschnitt, den zweiten Abschnitt bis hinein in den dritten Abschnitt der Kulissenführung bewegt.

In vorteilhafter Weiterbildung der Erfindung kann die Kulissenführung mit ihren Abschnitten in der Wandung des zweiten Rohrelements ausgebildet sein, so dass diese Wandung entsprechende Ausnehmungen aufweist. In dieser Weise lässt sich die Kulissenführung materialsparend und robust durch die jeweiligen Ausnehmungen in der Wandung des zweiten Rohrelements ausgestalten. Diesbezüglich versteht sich, dass hierzu die Wandstärke des zweiten Rohrelements zu Stabilitätszwecken ausreichend groß gewählt ist.

Die Verrastung des Halteelements innerhalb der Rastmulde gewährleistet eine dauerhafte Verbindung zwischen den beiden Rohrelementen, auch im Fall von Vibrationen oder dergleichen. Gleichwohl darf bereits an dieser Stelle darauf hingewiesen werden, dass ein gezieltes Lösen und Demontieren der beiden Rohrelemente voneinander möglich ist, nämlich durch ein Drehen der beiden Rohrelemente in entgegengesetzter Richtung, wobei das Halteelement außer Eingriff von der Rastmulde gelangt und sich anschließend durch den dritten, zweiten und ersten Abschnitt der Kulissenführung nach außen bewegen kann. Hiernach können die beiden Rohrelemente wieder voneinander getrennt werden.

Durch die Ausbildung des zumindest einen Halteelements bei dem ersten Rohrelement an dessen Innenumfangsfläche ist beispielsweise im rauen Baustelleneinsatz oder dergleichen sichergestellt, dass das Halteelement nicht beschädigt wird, wenn eine Außenumfangsfläche des ersten Rohrelements in Kontakt mit Fremdkörpern, Schmutz oder dergleichen gelangt. Des Weiteren ist hierdurch gewährleistet, dass auch die Kulissenführung, wenn die beiden Rohrelemente zusammengesteckt sind und das Halteelement wie erläutert formschlüssig mit der Kulissenführung in Eingriff gelangt ist, gegen ein Eindringen von Schmutz oder Fremdpartikeln von außen geschützt ist, so dass eine gezielte Gleitbewegung des Halteelements innerhalb der Kulissenführung - insbesondere bei einem Lösen der beiden Rohrelemente voneinander - nicht beeinträchtigt ist.

In gleicher Weise ist für ein Zusammenstecken der beiden Rohrelemente an ihren Stirnseiten von Vorteil, wenn der Durchmesser der Stirnseite des ersten Rohrelements, angrenzend zu der das Halteelement vorgesehen ist, größer ist als der Durchmesser der Stirnseite des zweiten Rohrelements, angrenzend zu der die Kulissenführung vorgesehen ist. Hierdurch kann das erste Rohrelement mit seiner Stirnseite klemmfrei auf die Stirnseite des zweiten Rohrelements aufgesteckt werden. Hierbei ist beachten, dass bei diesem Aufeinanderstecken die beiden Rohrelemente geeignet zueinander ausgerichtet sind, nämlich derart, dass dann das Halteelement formschlüssig mit der Kulissenführung in Eingriff gelangt.

In vorteilhafter Weiterbildung der Erfindung kann das Halteelement in einer Ebene tangential zur Wandung des ersten Rohrelements einen kreisförmigen Querschnitt aufweisen. Hierdurch ist ein klemmfreies Gleiten des Halteelements durch den ersten Abschnitt, den zweiten Abschnitt hinein in den dritten Abschnitt der Kulissenführung sichergestellt. Weiters ermöglicht eine solche Ausgestaltung des Halteelements eine wirkungsvolle Aufnahme innerhalb der Rastmulde, um dadurch das erste Rohrelement bezüglich des zweiten Rohrelements rotatorisch zu verrasten.

Eine zuverlässige Verbindung der beiden Rohrelemente an ihren Stirnseiten kann dadurch erreicht werden, dass entlang von deren Umfang jeweils eine Mehrzahl von Halteelementen und eine Mehrzahl von entsprechenden Kulissenführungen vorgesehen sind. Beispielsweise ist es für eine ausreichende Aufnahme und Ableitung von Kräften zwischen den miteinander verbundenen Rohrelementen zweckmäßig, wenn entlang des Umfangs des ersten Rohrelements drei Halteelemente ausgebildet sind, und in Entsprechung hierzu entlang des Umfangs des zweiten Rohrelements drei Kulissenführungen ausgebildet sind. Diesbezüglich versteht sind, dass ein Abstand der Halteelemente entlang des Umfangs des ersten Rohrelements jeweils auf den Abstand der Kulissenführungen entlang des Umfangs des zweiten Rohrelements abgestimmt ist, wobei die Halteelemente und die Kulissenführungen vorzugsweise entlang des Umfangs des ersten bzw. zweiten Rohrelements jeweils gleichmäßig zueinander beabstandet sind.

Ein Verfahren nach der vorliegenden Erfindung dient zum Verbinden eines Systems nach einem der Ansprüche 1-5, wobei dessen zumindest zwei Rohrelemente an ihren einander gegenüberliegenden Stirnseiten mit folgenden Schritten verbunden werden:
Bereitstellen eines ersten Rohrelements eines Systems nach einem der Ansprüche 1-5, das zumindest ein Halteelement aufweist,
Bereitstellen eines zweiten Rohrelements eines Systems nach einem der Ansprüche 1-5, das zumindest eine Kulissenführung aufweist, wobei das zweite Rohrelement koaxial zum ersten Rohrelement positioniert und derart angeordnet wird, dass seine Stirnseite, angrenzend zu der die Kulissenführung ausgebildet ist, in Gegenüberstellung zur Stirnseite des ersten Rohrelements gelangt; und
Bewegen der Rohrelemente in Richtung zueinander, derart, dass das Halteelement formschlüssig mit der Kulissenführung in Eingriff gelangt und sich dadurch selbsttätig durch den ersten Abschnitt, den zweiten Abschnitt bis hinein in den dritten Abschnitt der Kulissenführung bewegt,
wobei das erste und zweite Rohrelement, nachdem das Halteelement in den dritten Abschnitt der Kulissenführung gelangt ist, relativ zueinander um ihre Längsachse verdreht werden, derart, dass dadurch das Halteelement in die Rastmulde gelangt,
wobei, wenn das Halteelement in der Rastmulde aufgenommen ist, zwischen den Rohrelementen eine Nut ausgebildet ist, wobei in die Nut ein Abstandselement eingebracht wird, so dass das Halteelement dadurch in der Rastmulde gehalten wird und ein Verdrehen der beiden Rohrelemente relativ zueinander um ihre Längsachse unterbunden ist.

In vorteilhafter Weiterbildung der Erfindung kann das erste Rohrelement, bevor es mit dem zweiten Rohrelement verbunden wird, derart angeordnet sein, dass seine Längsachse vertikal verläuft und seine Stirnseite, angrenzend zu der das Halteelement ausgebildet ist, nach oben weist. Das zweite Rohrelement wird dann derart angeordnet, dass es koaxial oberhalb des ersten Rohrelements positioniert ist und seine Längsachse ebenfalls vertikal verläuft. Zum Verbinden der beiden Rohrelemente wird anschließend das zweite Rohrelement in Richtung des ersten Rohrelements abgesenkt, wobei dadurch das Halteelement formschlüssig mit der Kulissenführung in Eingriff gelangt.

Gemäß einer alternativen vorteilhaften Weiterbildung des Verfahrens nach der vorliegenden Erfindung ist es auch möglich, dass das erste Rohrelement, bevor es mit dem zweiten Rohrelement verbunden wird, derart angeordnet wird, dass seine Längsachse vertikal verläuft und seine Stirnseite, angrenzend zu der das Halteelement ausgebildet ist, nach unten weist. Sodann wird das zweite Rohrelement derart angeordnet, dass es koaxial unterhalb des ersten Rohrelements positioniert ist und seine Längsachse ebenfalls vertikal verläuft. Anschließend wird zum Verbinden der beiden Rohrelemente das erste Rohrelement in Richtung des zweiten Rohrelements abgesenkt, wobei dadurch das Halteelement formschlüssig mit der Kulissenführung in Eingriff gelangt.

Das genannte Verdrehen der Rohrelemente relativ zueinander, um dadurch das Halteelement in die Rastmulde hinein gelangen zu lassen, kann in einfacher Weise dadurch erfolgen, dass ein Moment auf zumindest einen Raststeg aufgebracht wird, der an einer Außenumfangsfläche zumindest eines Rohrelements angebracht ist. Hierbei kann ein Werkzeug zum Einsatz kommen, das einerseits an eine Krümmung der Außenumfangsfläche eines Rohrelements angepasst ist, und andererseits ein Kontaktelement aufweist, das in Eingriff mit dem Raststeg gelangen kann, um das gewünschte Moment auf das Rohrelement um dessen Längsachse aufzubringen.

Die Erfindung sieht des Weiteren ein Verfahren zum Lösen eines Systems nach einem der Ansprüche 1-5 mit zwei Rohrelementen vor, die an ihren gegenüberliegenden Stirnseiten miteinander verbunden sind. Bei diesem Verfahren werden die Rohrelemente voneinander gelöst, indem das Abstandselement aus der Nut entfernt wird, und anschließend die Rohrelemente relativ zueinander um ihre Längsachse derart verdreht werden, dass das zumindest eine Halteelement außer Eingriff von der Rastmulde gelangt und anschließend durch den dritten Abschnitt und den zweiten Abschnitt der Kulissenführung bis in deren ersten Abschnitt gleitet. Sobald das Halteelement sich innerhalb des ersten Abschnitts der Kulissenführung befindet, werden die Rohrelemente axial voneinander wegbewegt, so dass das Halteelement aus dem ersten Abschnitt der Kulissenführung heraus nach außen gelangt. Anschließend können die Rohrelemente voneinander gelöst bzw. demontiert werden.

Die Erfindung ist nachfolgend anhand einer bevorzugten Ausführungsform in der Zeichnung schematisch dargestellt und wird unter Bezugnahme auf die Zeichnung ausführlich beschrieben.

Es zeigen:
- Fig. 1: eine vereinfachte Seitenansicht von einander gegenüberliegenden Stirnseiten eines ersten Rohrelements und eines zweiten Rohrelements,
- Fig. 2: eine Seitenansicht einer Stirnseite des zweiten Rohrelements von Fig. 1,
- Fig. 3: eine Perspektivdarstellung der Rohrelemente von Fig. 1, vor einem Zusammenstecken,
- Fig. 4-6: Perspektivdarstellungen der Rohrelemente von Fig. 1, im Verlauf eines Zusammensteckens,
- Fig. 7: die Rohrelemente von Fig. 1, in vollständig zusammengestecktem Zustand,
- Fig. 8: eine vereinfachte Seitenansicht der beiden Rohrelemente von Fig. 1 nach einem Verbinden, in einem Zwischenzustand, und
- Fig. 9: eine vereinfachte Seitenansicht der beiden Rohrelemente von Fig. 1 nach einem Verbinden, in einem Endzustand.

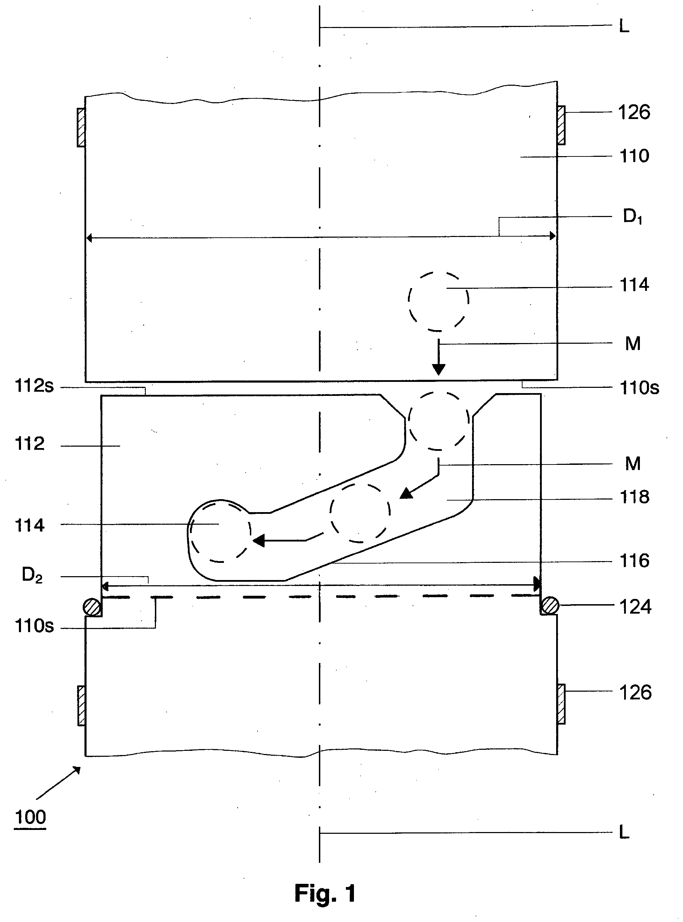

In den Fig. 1-3 sind Einzelheiten eines erfindungsgemäßen Systems 100 und dessen Bauteilen erläutert, die an Rohrelementen 110, 112 ausgebildet sein können. Im Einzelnen umfasst das System 100 zumindest ein Halteelement 114, das an einer Wandung eines ersten Rohrelements 110 ausgebildet ist. Des Weiteren umfasst das System 100 zumindest eine Kulissenführung 116, die im Bereich einer Wandung eines zweiten Rohrelements 112 ausgebildet ist.

Die Rohrelemente 110, 112 sind in der Fig. 1 in einer Seitenansicht dargestellt, nämlich mit ihren einander gegenüberliegenden Stirnseiten 110ₛ, 112ₛ. Das Halteelement 114 ist an der Wandung des ersten Rohrelements 110 angrenzend an dessen Stirnseite 110ₛ ausgebildet, nämlich an dessen Innenumfangsfläche. Entsprechend ist das Halteelement 114 von außen nicht sichtbar und in Fig. 1 durch gestrichelte Linien angedeutet.

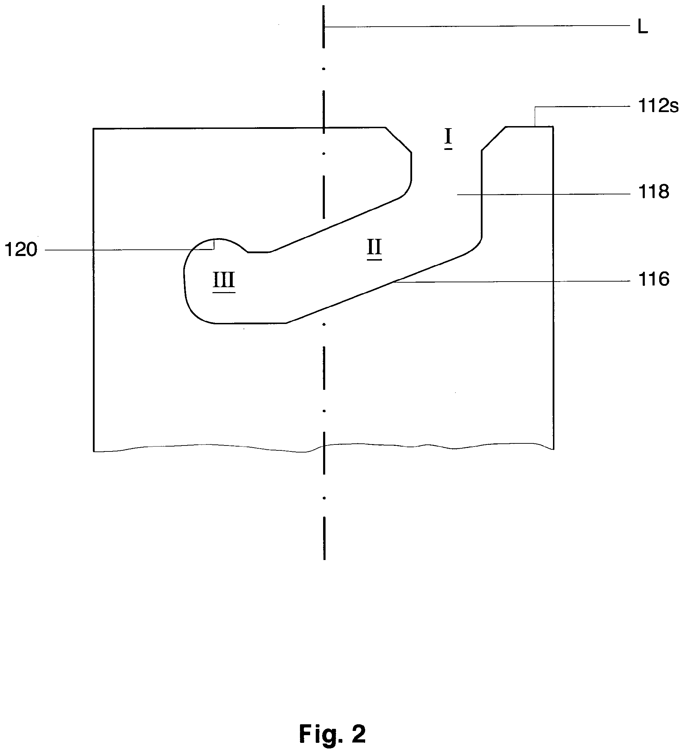

Das zweite Rohrelement 112 ist in der Fig. 2 separat in einer Seitenansicht dargestellt, nämlich mit dessen Stirnseite 112ₛ. Die Kulissenführung 116 ist in der Wandung des zweiten Rohrelements 112 ausgebildet, und weist insgesamt drei Abschnitte I, II und III auf. Im Einzelnen ist der erste Abschnitt I angrenzend zur Stirnseite 112ₛ offen und erstreckt sich parallel zur Längsachse L des zweiten Rohrelements 112. Der zweite Abschnitt II schließt an den ersten Abschnitt I an und erstreckt sich schräg zur Längsachse L des zweiten Rohrelements 112. Der dritte Abschnitt III schließt an den zweiten Abschnitt II an und erstreckt sich quer zur Längsachse des zweiten Rohrelements 112. Indem die Kulissenführung 116 in der Wandung des zweiten Rohrelements 112 ausgebildet ist, ist in der Wandung dieses Rohrelements eine entsprechende Ausnehmung 118 ausgebildet. Des Weiteren umfasst der dritte Abschnitt III der Kulissenführung 116 eine Rastmulde 120, deren Funktion nachstehend noch im Einzelnen erläutert ist.

Die Ansicht nach Fig. 1 verdeutlicht, dass das erste Rohrelement 110 an seiner Stirnseite 110ₛ einen Durchmesser D₁ aufweist. Das zweite Rohrelement 112 weist an seiner Stirnseite 112ₛ einen Durchmesser D₂ auf. Die Abmessungen der Rohrelemente 110, 112 an ihren Stirnseiten sind derart gewählt, dass die Beziehung gilt: D₂ < D₁. Weil der Durchmesser D₂ der Stirnseite 112ₛ des zweiten Rohrelements 112 kleiner gewählt ist als der Durchmesser D₁ der Stirnseite 110ₛ des ersten Rohrelements 110, kann das erste Rohrelement 110 mit seiner Stirnseite 110ₛ auf das zweite Rohrelement 112 aufgesteckt werden. Dieses Zusammenstecken der beiden Rohrelemente, wodurch das erste Rohrelement 110 an dem zweiten Rohrelement 112 montiert wird, ist in der Fig. 1 durch den Pfeil M symbolisiert.

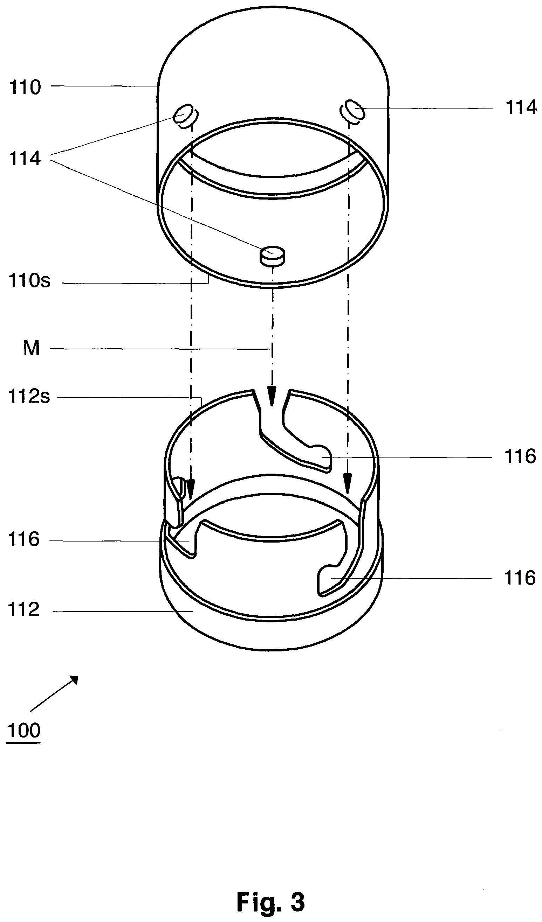

Fig. 3 zeigt die beiden Rohrelemente 110, 112 von Fig. 1 in einer Perspektivansicht. An dem ersten Rohrelement 110 sind an dessen Innenumfangsfläche jeweils drei Halteelemente 114 ausgebildet, die entlang des Umfangs des ersten Rohrelements 110 gleichmäßig zueinander beabstandet sind. In gleicher Weise sind an dem zweiten Rohrelement 112 ebenfalls drei Kulissenführungen 116 vorgesehen, nämlich entlang des Umfangs des zweiten Halteelements 112 in einem gleichmäßigen Abstand zueinander.

In Fig. 3 ist durch den Pfeil M eine Montage des ersten Rohrelements 110 an dem zweiten Rohrelement 112 symbolisiert. Hierbei werden die beiden Rohrelemente 110, 112 zunächst koaxial zueinander positioniert, wobei beispielsweise das erste Rohrelement 110 oberhalb des zweiten Rohrelements 112 positioniert ist und die Halteelemente 114 des ersten Rohrelements 110 jeweils mit den ersten Abschnitten I der jeweiligen Kulissenführungen 116 des zweiten Rohrelements 112 ausgerichtet sind. Ausgehend von der in Fig. 3 gezeigten Ausgangsposition der beiden Rohrelemente 110, 112 kann dann ein Verbinden dieser Rohrelemente in der Weise erfolgen, dass das erste Rohrelement 110 in Richtung des zweiten Rohrelements 112 bewegt wird bzw. auf das zweite Rohrelement 112 abgesenkt wird.

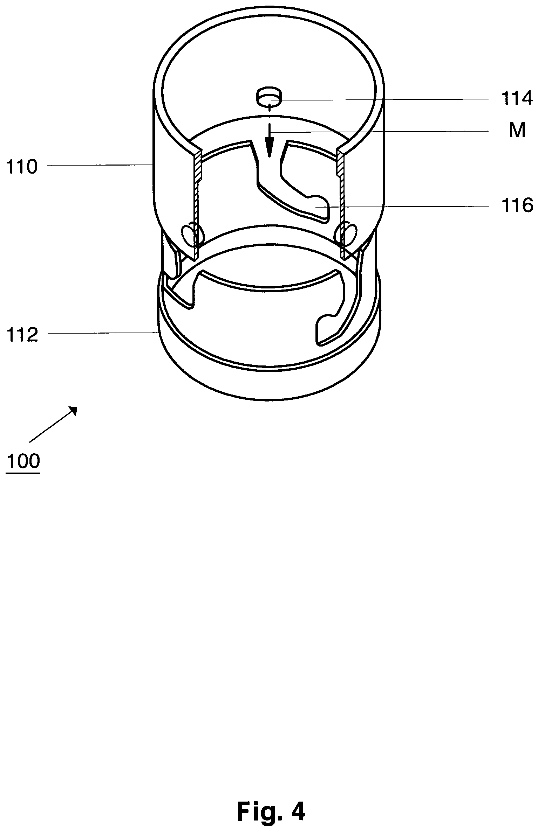

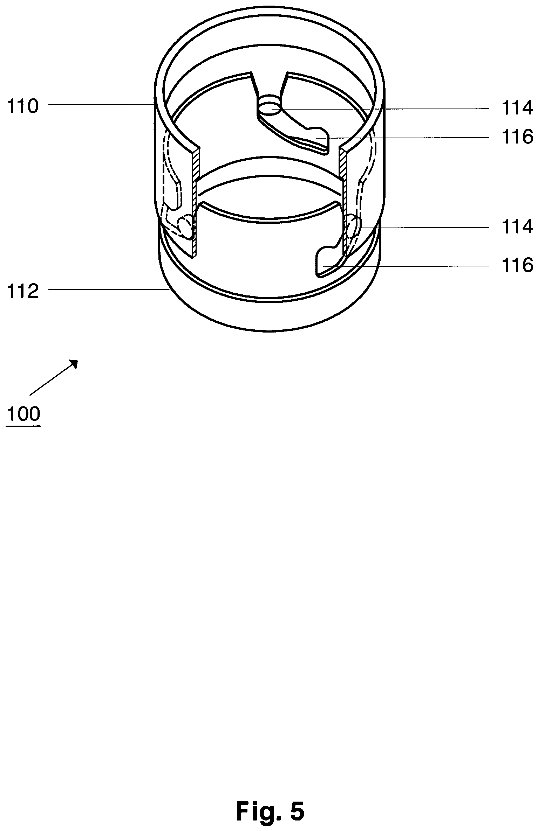

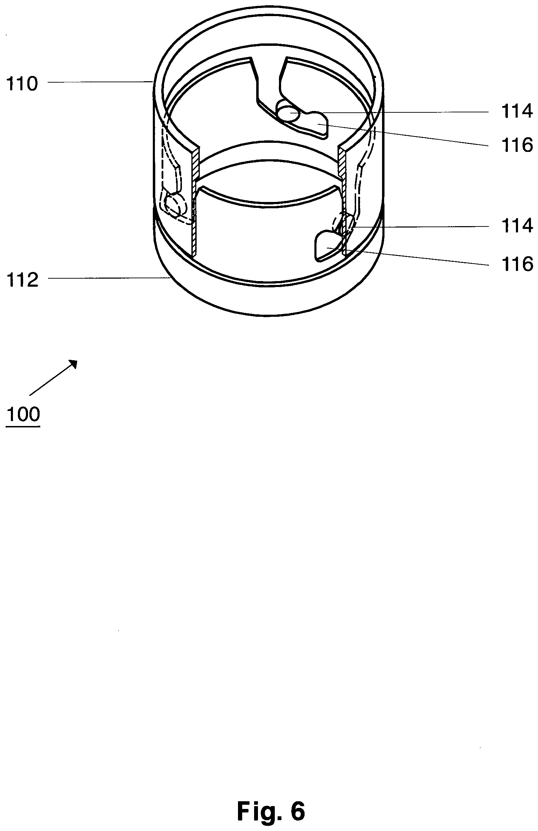

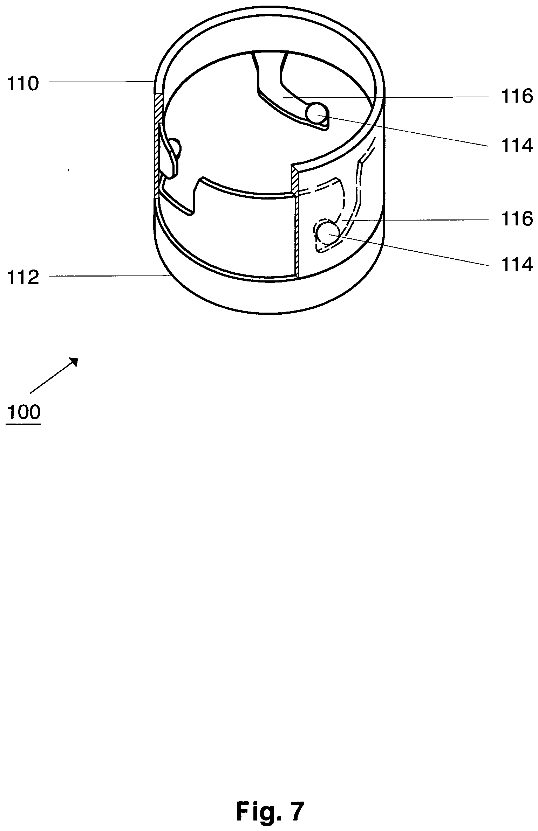

Durch die Perspektivansichten der Fig. 4-6 ist der Ablauf einer Montage der beiden Rohrelemente 110, 112 an ihren Stirnseiten gezeigt. Sobald die Stirnseite 110ₛ des ersten Rohrelements 110 die Stirnseite 112ₛ des zweiten Rohrelements 112 übergreift, treten die Halteelemente 114 in den ersten Abschnitt I der jeweiligen Kulissenführungen 116 des zweiten Rohrelements 112 ein (Fig. 4, Fig. 5). Anschließend gelangen die Halteelemente 114 durch den zweiten Abschnitt II der jeweiligen Kulissenführungen 116 automatisch in deren dritten Abschnitt III (Fig. 7). Sobald die Halteelemente 114 sich in dem dritten Abschnitt III der Kulissenführungen 116 befinden, kann durch ein weiteres Verdrehen der Rohrelemente 110, 112 relativ zueinander bewirkt werden, dass die Halteelemente 114 in den jeweiligen Rastmulden 120 aufgenommen werden und dort einrasten. Im Ergebnis sind dann die beiden Rohrelemente 110, 112 sowohl axial zueinander, d.h. in Richtung von deren Längsachse L festgelegt, als auch gegen eine selbsttätige Rotation relativ zueinander gesichert. In dieser Weise ist eine betriebssichere Verbindung der beiden Rohrelemente 110, 112 an ihren gegenüberliegenden Stirnseiten 110ₛ, 112ₛ sichergestellt.

Die Positionierung des ersten Halteelements 110 gemäß der Darstellung von Fig. 7, wonach dessen Stirnseite 110ₛ auf die Stirnseite 112ₛ des zweiten Rohrelements 112 gesteckt ist, ist in der Fig. 1 zusätzlich durch die gestrichelt dargestellte Stirnseite 110ₛ des ersten Rohrelements 110 angedeutet. Des Weiteren sind in der Fig. 1 die verschiedenen Positionen des Halteelements 114 innerhalb der Kulissenführung 116 während einer Montage der beiden Rohrelemente 110, 112 angedeutet.

An den Außenumfangsflächen des ersten und zweiten Rohrelements 110, 112 können Raststege 126 (Fig. 1) ausgebildet sein. Diese Raststege 126 dienen in Verbindung mit einem (nicht gezeigten) Werkzeug zu dem Zweck, dass die Rohrelemente 110, 112, nachdem bei einer Montage die Halteelemente 114 in den dritten Abschnitt III der Kulissenführungen 116 gelangt sind, relativ zueinander verdreht werden können, so dass dann die Halteelemente 114 wie erläutert in den Rastmulden 120 einrasten. Hierbei kann mittels eines geeigneten Werkzeugs und in Wechselwirkung mit den Raststegen 126 ein Moment um die Längsachse L der Rohrelemente 110, 112 erzeugt werden.

Bezüglich eines Verbindens des Rohrelemente 110, 112 an ihren einander gegenüberliegenden Stirnseiten 110ₛ, 112ₛ darf darauf hingewiesen werden, dass es ergänzend zu dem Montageablauf, der in den Fig. 3-7 veranschaulicht ist, ebenfalls möglich ist, das erste Rohrelement 110 zuunterst anzuordnen, wobei seine Längsachse vertikal verläuft und seine Stirnseite 110ₛ, angrenzend zu der das Halteelement 114 ausgebildet ist, nach oben weist. Hierbei wird dann das zweite Rohrelement 112 koaxial oberhalb des ersten Rohrelements 110 positioniert und derart angeordnet, dass seine Längsachse L vertikal verläuft und seine Stirnseite 112ₛ, angrenzend zu der die Kulissenführungen 116 ausgebildet sind, in Gegenüberstellung zur Stirnseite 110ₛ des ersten Rohrelements 110 gelangt. Dies entspricht einem Verdrehen der Rohrelemente 110, 112, wie in Fig. 3 gezeigt, um 180°. Eine anschließende Montage der beiden Rohrelemente 110, 112 folgt dann dem gleichen Ablauf wie in den Fig. 4-7 gezeigt, wobei wie erläutert die Halteelemente 114 formschlüssig in Eingriff mit den Kulissenführungen 116 gelangen. Insoweit darf zur Vermeidung von Wiederholungen auf die obige Erläuterung zu den Fig. 4-7 verwiesen werden.

Nachdem die beiden Rohrelemente 110, 112 miteinander verbunden sind, wird ein Abstandselement in Form eines O-Rings (vgl. Fig. 1) zwischen den Rohrelementen 110, 112 angeordnet, nämlich innerhalb einer Nut, die sich zwischen den Rohrelementen 110, 112 im Bereich von deren Außenumfangsfläche bilden kann. Durch diesen O-Ring ist sichergestellt, dass die Rohrelemente 110, 112 einen vorbestimmten Abstand zueinander aufweisen und nicht "auf Block" liegen. Hierdurch wird das Halteelement 114 innerhalb der Rastmulde 120 gehalten und eine selbsttätige Verdrehung der beiden Rohrelemente 110,112 relativ zueinander verhindert, so dass im Ergebnis eine betriebssichere Verbindung der beiden Rohrelemente 110, 112 an ihren Stirnseiten 110ₛ, 112ₛ gewährleistet ist.

Ein Lösen der beiden Rohrelemente 110, 112 kann ausgehend von dem in Fig. 7 gezeigten Zustand in einfacher Weise dadurch erfolgen, dass die Rohrelemente 110, 112 relativ zueinander um ihre Längsachse L derart verdreht werden, dass die Halteelemente 114 außer Eingriff von den Rastmulden 120 gelangen. Zu diesem Zweck wird der O-Ring zuvor aus der Nut zwischen den beiden Rohrelementen entfernt. Anschließend gleiten dann bei einer weiteren Verdrehung der Rohrelemente 110, 112 die Halteelemente 114 durch den dritten Abschnitt III und den zweiten Abschnitt II der jeweiligen Kulissenführungen 116 bis in deren ersten Abschnitt I. Sobald sich die Halteelemente 114 innerhalb des ersten Abschnitts I der jeweiligen Kulissenführungen 116 befinden, können die Rohrelemente 110, 112 axial, d.h. entlang ihrer Längsachse L voneinander wegbewegt werden. In Folge dessen bewegen sich dann die Halteelemente 114 aus dem ersten Abschnitt I der jeweiligen Kulissenführungen 116 heraus nach außen, wodurch die Rohrelemente 110, 112 vollständig voneinander gelöst werden können.

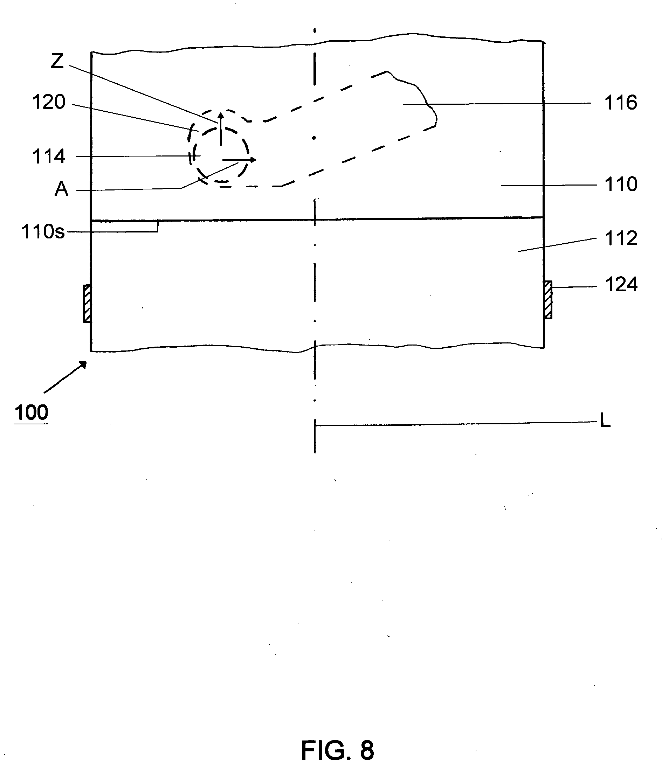

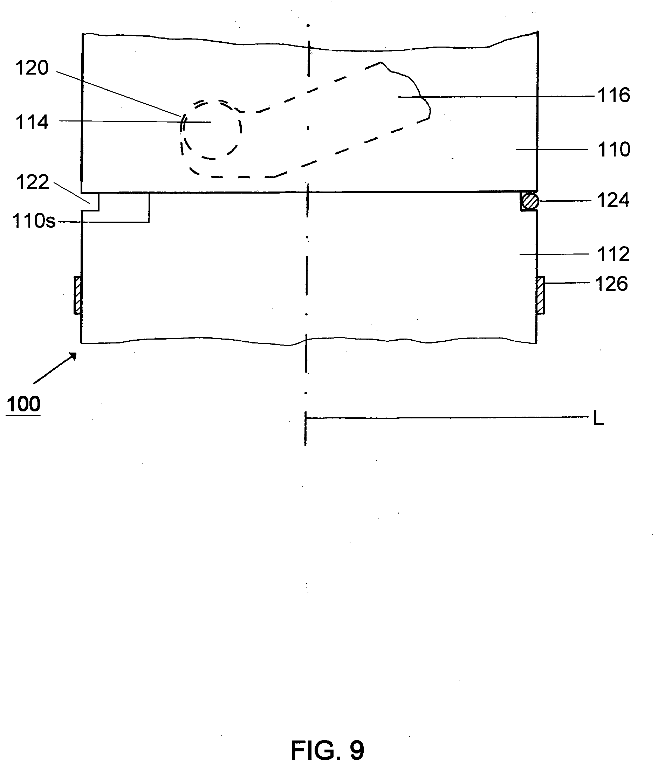

In den Figuren 8 und 9 ist jeweils eine vereinfachte Seitenansicht der beiden Rohrelemente 110, 112 gezeigt, wenn deren Stirnseiten 110ₛ, 112ₛ miteinander verbunden werden. Nachdem das Halteelement 114 in die Kulissenführung 116 eingetreten und bis in dessen dritten Abschnitt III gelangt ist (Fig. 8), liegen die Rohrelemente 110, 112 zunächst "auf Block". Ausgehend von diesem Zustand kann das erste Rohrelement 110, in Richtung des Pfeils Z (vgl. Fig. 8), in axialer Richtung von dem zweiten Rohrelement 112 weg bewegt werden, so dass sich im Bereich der Außenumfangsfläche der beiden Rohrelemente 110, 112 eine Nut 122 bildet und gleichzeitig das Halteelement 114 sich in die Rastmulde 120 einfügt. In die Nut 122 kann ein O-Ring 124 eingebracht werden, der die Funktion eines Abstandselements zwischen den beiden Rohrelementen 110, 112 übernimmt. Dies bedeutet, dass durch den O-Ring 124 ein vorbestimmter Abstand der beiden Rohrelemente 110, 112 definiert und dadurch sichergestellt ist, dass das Halteelement 114 innerhalb der Rastmulde 120 verbleibt (vgl. Fig. 9) und ein selbsttätiges Verdrehen der beiden Rohrelemente 110, 112 relativ zueinander nicht möglich ist. Zu Zwecken der Vereinfachung ist in der Fig. 9 der O-Ring 124 im Querschnitt nur im rechten Bildbereich gezeigt. Es versteht sich, dass der O-Ring 124 auch die Nut 122 im linken Bildbereich ausfüllt.

Zum Lösen der beiden Rohrelemente 110, 112 voneinander wird der O-Ring 124 zunächst durch ein geeignetes Werkzeug (z.B. Haken oder dergleichen) aus der Nut 122 herausgehoben. Im Anschluss daran gelangen die beiden Rohrelemente 110, 112 wieder "auf Block" (Fig. 8), wobei dann das erste Rohrelement 110, in Richtung des in der Fig. 8 gezeigten Pfeils A, relativ zum zweiten Rohrelement 112 verdreht werden kann, um das Halteelement 114 ausser Eingriff von der Kulissenführung 116 zu bringen.

Schließlich sei erwähnt, dass es möglich ist, eine Rohrverbindung mit einer Vielzahl von Rohrelementen auszubilden, an deren gegenüberliegenden Stirnseiten jeweils ein Halteelement 114 und eine Kulissenführung 116 nach dem erfindungsgemäßen System wie vorstehend erläutert ausgebildet sind. Hierdurch ist es möglich, eine lange Rohrverbindung bzw. Rohrleitung durch eine Vielzahl von einzelnen Rohrelementen mit wenigen Handgriffen und in kurzer Zeit zu realisieren, wobei die Rohrelemente bei Bedarf auch wieder voneinander gelöst werden können.

## Patentansprüche

1. System (100) zum Verbinden von zumindest zwei Rohrelementen (110; 112), das zumindest ein erstes Rohrelement (110) und ein zweites Rohrelement (112) aufweist, umfassend
zumindest ein Halteelement (114), das an einer Wandung des ersten Rohrelements (110) angrenzend an einer Stirnseite (110s) davon, nämlich an der Innenumfangsfläche des ersten Rohrelements (110), ausgebildet ist,
zumindest eine Kulissenführung (116), die im Bereich einer Wandung des zweiten Rohrelements (112) angrenzend an einer Stirnseite (112s) davon ausgebildet ist,
wobei das erste Rohrelement (110) und das zweite Rohrelement (112) mit ihren Stirnseiten (110s; 112s), an denen jeweils das Halteelement (114) und die Kulissenführung (116) ausgebildet sind, zusammensteckbar sind und dabei das Halteelement (114) formschlüssig mit der Kulissenführung (116) in Eingriff gelangt,
wobei die Kulissenführung (116) umfasst:
- einen ersten Abschnitt (I), der angrenzend zur Stirnseite (112s) des zweiten Rohrelements (112) offen ist und sich parallel zur Längsachse (L) des zweiten Rohrelements (112) erstreckt,
- einen zweiten Abschnitt (II), der an den ersten Abschnitt (I) anschließt und sich schräg zur Längsachse (L) des zweiten Rohrelements (112) erstreckt, und
- einen dritten Abschnitt (III), der an den zweiten Abschnitt (II) anschließt und sich quer zur Längsachse (L) des zweiten Rohrelements (112) erstreckt, wobei der dritte Abschnitt (III) der Kulissenführung (116) eine Rastmulde (120) aufweist, in der das Halteelement (114) verrastbar ist, wobei das zweite Rohrelement (112), wenn das Halteelement (114) in der Rastmulde (120) aufgenommen ist, gegen eine selbsttätige Verdrehung relativ zum ersten Rohrelement (110) blockiert und in axialer Richtung bezüglich des ersten Rohrelements (110) festgelegt ist, so dass ein axiales Bewegen der Rohrelemente (110; 112) relativ zueinander und parallel zu deren Längsachse (L) nicht möglich ist,
wobei, wenn das Halteelement (114) in der Rastmulde (120) aufgenommen ist, zwischen den stirnseitigen Rändern der Rohrelemente (110, 112) im Bereich der Außenumfangsflächen der beiden Rohrelemente (110, 112) eine Nut (122) ausgebildet ist, **dadurch gekennzeichnet,**
**dass** in der Nut (122) ein Abstandselement (124) eingebracht ist.

2. System (100) nach Anspruch 1, **dadurch gekennzeichnet, dass** die Kulissenführung (116) in der Wandung des zweiten Rohrelements (112) ausgebildet ist, so dass die Wandung des zweiten Rohrelements (112) im Bereich der Abschnitte der Kulissenführung (116) jeweils eine Ausnehmung (118) aufweist.

3. System (100) nach Anspruch 1 oder 2, **dadurch gekennzeichnet, dass** das Halteelement (114) in einer Ebene tangential zur Wandung des ersten Rohrelements (110) einen kreisförmigen Querschnitt aufweist.

4. System (100) nach einem der Ansprüche 1 bis 3, **dadurch gekennzeichnet, dass** der Durchmesser (D₁) der Stirnseite (110s) des ersten Rohrelements (110), angrenzend zu der das Halteelement (114) vorgesehen ist, größer ist als der Durchmesser (D₂) der Stirnseite (112s) des zweiten Rohrelements (112), angrenzend zu der die Kulissenführung (116) vorgesehen ist.

5. System (100) nach einem der Ansprüche 1 bis 4, **dadurch gekennzeichnet, dass** an einer Außenumfangsfläche des ersten Rohrelements (110) und/oder des zweiten Rohrelements (112) jeweils Raststege (126) angebracht sind, wobei die Raststege (126) mit einem separaten Werkzeug in Eingriff bringbar sind, um dadurch die beiden Rohrelemente (110; 112) um ihre Längsachse (L) relativ zueinander zu verdrehen und dadurch das Halteelement (114) in Eingriff mit der Rastmulde (120) oder außer Eingriff davon zu bringen.

6. Verfahren zum Verbinden eines Systems (100) nach einem der Ansprüche 1 bis 5, wobei die zumindest zwei Rohrelemente (110; 112) an ihren einander gegenüberliegenden Stirnseiten (110s, 112s) mit den folgenden Schritten verbunden werden:
Bereitstellen eines ersten Rohrelements (110) eines Systems (100) nach einem der Ansprüche 1 bis 5, das zumindest ein Halteelement (114) aufweist,
Bereitstellen eines zweiten Rohrelements (112) eines Systems (100) nach einem der Ansprüche 1 bis 5, das zumindest eine Kulissenführung (116) aufweist, wobei das zweite Rohrelement (112) koaxial zum ersten Rohrelement (110) positioniert und derart angeordnet wird, dass seine Stirnseite (112s), angrenzend zu der die Kulissenführung (116) ausgebildet ist, in Gegenüberstellung zur Stirnseite (110s) des ersten Rohrelements (110) gelangt, und
Bewegen der Rohrelemente (110, 112) in Richtung zueinander, derart, dass das Halteelement (114) formschlüssig mit der Kulissenführung (116) in Eingriff gelangt und sich dadurch selbsttätig durch den ersten Abschnitt (I), den zweiten Abschnitt (II) bis hinein in den dritten Abschnitt (III) der Kulissenführung (116) bewegt,
**dadurch gekennzeichnet,**
**dass** das erste und zweite Rohrelement (110; 112), nachdem das Halteelement (114) in den dritten Abschnitt (III) gelangt ist, relativ zueinander um ihre Längsachse (L) verdreht werden, derart, dass dadurch das Halteelement (114) in die Rastmulde (120) gelangt,
wobei, wenn das Halteelement (114) in der Rastmulde (120) aufgenommen ist, zwischen den Rohrelementen (110, 112) eine Nut (122) ausgebildet ist, wobei in die Nut (122) ein Abstandselement (124) eingebracht wird, so dass das Halteelement (114) dadurch in der Rastmulde (120) gehalten wird und ein Verdrehen der beiden Rohrelemente (110, 112) relativ zueinander um ihre Längsachse (L) unterbunden ist.

7. Verfahren nach Anspruch 6, **dadurch gekennzeichnet, dass** das erste Rohrelement (110), bevor es mit dem zweiten Rohrelement (112) verbunden wird, derart angeordnet wird, dass seine Längsachse (L) vertikal verläuft und seine Stirnseite (110s), angrenzend zu der das Halteelement (114) ausgebildet ist, nach oben weist, wobei das zweite Rohrelement (112) derart angeordnet wird, dass es koaxial oberhalb des ersten Rohrelements (110) positioniert ist und seine Längsachse (L) vertikal verläuft, wobei zum Verbinden der beiden Rohrelemente (110, 112) das zweite Rohrelement (112) in Richtung des ersten Rohrelements (110) abgesenkt wird und dadurch das Halteelement (114) formschlüssig mit der Kulissenführung (116) in Eingriff gelangt.

8. Verfahren nach Anspruch 6 oder 7, **dadurch gekennzeichnet, dass** das erste Rohrelement (110), bevor es mit dem zweiten Rohrelement (112) verbunden wird, derart angeordnet wird, dass seine Längsachse (L) vertikal verläuft und seine Stirnseite (110s), angrenzend zu der das Halteelement (114) ausgebildet ist, nach unten weist, wobei das zweite Rohrelement (112) derart angeordnet wird, dass es koaxial unterhalb des ersten Rohrelements (110) positioniert ist und seine Längsachse (L) vertikal verläuft, wobei zum Verbinden der beiden Rohrelemente (110, 112) das erste Rohrelement (110) in Richtung des zweiten Rohrelements (112) abgesenkt wird und dadurch das Halteelement (114) formschlüssig mit der Kulissenführung (116) in Eingriff gelangt.

9. Verfahren zum Lösen eines Systems (100) nach einem der Ansprüche 1 bis 5, wobei die zumindest zwei Rohrelemente (110; 112), die an ihren gegenüberliegenden Stirnseiten miteinander verbunden sind, voneinander gelöst werden, indem das Abstandselement (124) aus der Nut (122) entfernt wird, und anschließend die Rohrelemente (110; 112) relativ zueinander um ihre Längsachse (L) derart verdreht werden, dass das zumindest eine Halteelement (114) ausser Eingriff von der Rastmulde (120) gelangt und anschließend durch den dritten Abschnitt (III) und den zweiten Abschnitt (II) der zumindest einen Kulissenführung (116) bis in deren ersten Abschnitt (I) gleitet, wobei die Rohrelemente (110; 112), sobald sich das Halteelement (114) innerhalb des ersten Abschnitts (I) der Kulissenführung (116) befindet, axial voneinander weg bewegt werden, so dass das Halteelement (114) aus dem ersten Abschnitt (I) der Kulissenführung (116) heraus nach außen gelangt und dadurch die Rohrelemente (110;112) voneinander gelöst werden.

## Claims

1. A system (100) for connecting at least two tubular elements (110; 112) having at least a first tubular element (110) and a second tubular element (112), comprising
at least a retaining element (114) which is formed on a wall of the first tubular element (110) adjacent to a front side (110s) of it, namely on the inner circumferential surface of the first tubular element (110),
at least a sliding block guide (116) which is formed in the area of a wall of the second tubular element (112) adjacent to a front side (112s) of it,
with the first tubular element (110) and the second tubular element (112) with their front sides (110s; 112s), on which the retaining element (114) and the sliding block guide (116) each are formed, can be plugged together, with the retaining element (114) coming into engagement with the sliding block guide (116) by a positive connection,
with the sliding block guide (116) comprising:
- a first section (I), which is open adjacent to the front side (112s) of the second tubular element (112) and extends in parallel to the longitudinal axis (L) of the second tubular element (112),
- a second section (II) which connects to the first section (I) and extends obliquely to the longitudinal axis (L) of the second tubular element (112), and
- a third section (III), which connects to the second section (II) and extends obliquely to the longitudinal axis (L) of the second tubular element (112),
with the third section (III) of the sliding block guide (116) comprising a catch recess (120) in which the retaining element (114) can be locked in place, with the second tubular element (112), when the retaining element (114) is received in the catch recess (120), being blocked against an automatic twisting relative to the first tubular element (110), and being located in axial direction relative to the first tubular element (110) so that an axial movement of the tubular elements (110; 112) relative to each other and parallel to their longitudinal axis (L) is not possible,
with a groove (122) being formed between the front side borders of the tubular elements (110, 112) in the area of the outer circumferential surfaces of the two tubular elements (110, 112) when the retaining element (114) is received in the catch recess (120),
**characterised in**
**that** a spacer element (124) is introduced into the groove (122).

2. The system (100) according to claim 1, **characterized in that** the sliding block guide (116) is formed in the wall of the second tubular element (112) so that the wall of the second tubular element (112) in the area of the sections of the sliding block guide (116) each comprises a recess (118).

3. The system (100) according to claim 1 or 2, **characterized in that** the retaining element (114) in a plane tangentially to the wall of the first tubular element (110) comprises a circular cross-section.

4. The system (100) according to any one of claims 1 to 3, **characterized in that** the diameter (D₁) of the front side (110s) of the first tubular element (110), adjacent to which the retaining element (114) is provided, is greater than the diameter (D₂) of the front side (112s) of the second tubular element (112) adjacent to which the sliding block guide (116) is provided.

5. The system (100) according to any one of claims 1 to 4, **characterized in that** on an outer circumferential surface of the first tubular element (110) and/or the second tubular element (112) catch webs (126) each are attached with the catch webs (126) being engageable with a separate tool in order to twist the two tubular elements (110; 112) about their longitudinal axis (L) relative to each other as a result, and thus engage the retaining element (114) with the catch recess (120) or disengage it from said catch recess.

6. A method for connecting a system (100) according to any one of claims 1 to 5 with the at least two tubular elements (110; 112) being connected on their opposite front sides (110s, 112s) with the following steps:
providing a first tubular element (110) of a system (100) according to any one of claims 1 to 5 which comprises at least one retaining element (114),
providing a second tubular element (112) of a system (100) according to any one of claims 1 to 5 which comprises at least one sliding block guide (116) with the second tubular element (112) being positioned coaxially to the first tubular element (110) and located in such a way that its front side (112s), adjacent to which the sliding block guide (116) is formed, gets opposite to the front side (110s) of the first tubular element (110), and
moving of the tubular elements (110, 112) in a direction towards each other in such a way that the retaining element (114) comes into engagement with the sliding block guide (116) by a positive connection and thus moves automatically through the first section (I), the second section (II) up and into the third section (III) of the sliding block guide (116),
**characterized in**
**that** the first and second tubular element (110; 112), after the retaining element (114) has gotten into the third section (III), are twisted relative to each about their longitudinal axis (L) such that as a result the retaining element (114) gets into the catch recess (120),
with, when the retaining element (114) is received in the catch recess (120), a groove (122) being formed between the tubular elements (110, 112), with a spacer element (124) being introduced into the groove (122) so that, as a result, the retaining element (114) is kept in the catch recess (120), and a twisting of the two tubular elements (110, 112) relative to each other about their longitudinal axis (L) is prevented.

7. The method according to claim 6, **characterized in that** the first tubular element (110), before it is connected with the second tubular element (112), is located such that its longitudinal axis (L) runs vertically and its front side (110s), adjacent to which the retaining element (114) is formed, faces upwards, with the second tubular element (112) being located such that it is positioned coaxially above the first tubular element (110) and its longitudinal axis (L) runs vertically, wherein, for connecting the two tubular elements (110, 112), the second tubular element (112) is lowered in the direction of the first tubular element (110) and thus the retaining element (114) comes into engagement with the sliding block guide (116) by a positive connection.

8. The method according to claim 6 or 7, **characterized in that** the first tubular element (110), before it is connected with the second tubular element (112), is located such that its longitudinal axis (L) runs vertically and its front side (110s), adjacent to which the retaining element (114) is formed, faces downwards, with the second tubular element (112) being located such that it is positioned coaxially below the first tubular element (110) and its longitudinal axis (L) runs vertically, wherein, for connecting the two tubular elements (110, 112), the first tubular element (110) is lowered in the direction of the second tubular element (112) and thus the retaining element (114) comes into engagement with the sliding block guide (116) by a positive connection.

9. The method for releasing a system (100) according to any one of claims 1 to 5, with the at least two tubular elements (110; 112), connected with each other on their opposite front sides, being released from each other by removing the spacer element (124) from the groove (122), and subsequently the tubular elements (110; 112) are twisted relative to each other about their longitudinal axis (L) so that the at least one retaining element (114) is disengaged from the catch recess (120), and subsequently slides through the third section (III) and the second section (II) of the at least one sliding block guide (116) up to its first section (I), with the tubular elements (110; 112), as soon as the retaining element (114) is located within the first section (I) of the sliding block guide (116), 'are moved axially away from each other so that the retaining element (114) gets out of the first section (I) of the sliding block guide (116) towards the outside and thus the tubular elements (110; 112) are released from each other.

## Revendications

1. Système (100) pour le raccordement d'au moins deux éléments de tuyaux (110; 112) qui comprend au moins un premier élément de tuyau (110) et un deuxième élément de tuyau (112) comportant:
au moins un élément de retenue (114) qui est formé sur une paroi du premier élément de tuyau (110) adjacent à une face frontale (110s) de celui-ci, à savoir à la surface périphérique intérieure du premier élément de tuyau (110),
au moins un guidage à coulisse (116) qui est formé dans une zone d'une paroi du deuxième élément de tuyau (112) adjacent à une face frontale (112s) de celui-ci,
le premier élément de tuyau (110) et le deuxième élément de tuyau (112) avec leurs faces frontales (110s; 112s), auxquelles chacun l'élément de retenue (114) et le guidage à coulisse (116) sont formés, étant enfichables l'un avec l'autre, l'élément de retenue (114) s'engageant de manière positive avec le guidage à coulisse (116),
le guidage à coulisse (116) comportant:
- une première partie (I) qui est ouverte adjacente à la face frontale (112s) du deuxième élément de tuyau (112) et s'étend parallèlement à l'axe longitudinal (L) du deuxième élément de tuyau (112),
- une deuxième partie (II) raccordant à la première partie (I) et s'étendant obliquement par rapport à l'axe longitudinal (L) du deuxième élément de tuyau (112), et
- une troisième partie (III) raccordant à la deuxième partie (II) et s'étendant obliquement par rapport à l'axe longitudinal (L) du deuxième élément de tuyau (112),
la troisième partie (III) du guidage à coulisse (116) comportant un creux d'enclenchement (120) dans lequel l'élément de retenue (114) est encliquetable, le deuxième élément de tuyau (112), lorsque l'élément de retenue (114) est reçu dans le creux d'enclenchement (120), bloquant contre une torsion automatique relatif au premier élément de tuyau (110) et est fixé en direction axiale relatif au premier élément de tuyau (110) de manière qu'un mouvement des éléments de tuyaux (110; 112) l'un par rapport à l'autre et parallèlement à leur axe longitudinal (L) n'est pas possible,
une rainure (122) étant formé, lorsque l'élément de retenue (114) est reçu dans le creux d'enclenchement (120), entre les bords à la face frontale des éléments de tuyaux (110, 112) dans la zone des surfaces périphériques extérieures des deux éléments de tuyaux (110, 112), **caractérisé en ce**
**que** dans la rainure (122) un élément d'écartement (124) est introduit.

2. Système (100) selon la revendication 1, **caractérisé en ce que** le guidage à coulisse (116) est formé dans la paroi du deuxième élément de tuyau (112) de manière que la paroi du deuxième élément de tuyau (112) dans la zone des parties du guidage à coulisse (116) chacune comprend un creux (118).

3. Système (100) selon la revendication 1 ou 2, **caractérisé en ce que** l'élément de retenue (114) dans un plan tangentiellement à la paroi du premier élément de tuyau (110) comprend une section transversale circulaire.

4. Système (100) selon l'une quelconque des revendications 1 à 3, **caractérisé en ce que** le diamètre (D₁) de la face frontale (110s) du premier élément de tuyau (110), adjacent auquel l'élément de retenue (114) est prévu, est supérieur au diamètre (D₂) de la face frontale (112s) du deuxième élément de tuyau (112), adjacent auquel le guidage à coulisse (116) est prévu.

5. Système (100) selon l'une quelconque des revendications 1 à 4, **caractérisé en ce que** des nervures d'encliquetage (126) chacun sont montées à une surface périphérique extérieure du premier élément de tuyau (110) et/ou du deuxième élément de tuyau (112), les nervures d'encliquetage (126) pouvant être engageable avec un outil séparé pour tordre par cela les deux éléments de tuyaux (110; 112) autour de leur axe longitudinal (L) l'un par rapport à l'autre et ainsi engager ou désengager l'élément de retenue (114) avec le creux d'enclenchement (120).

6. Procédé pour le raccordement d'un système (100) selon l'une quelconque des revendications 1 à 5, les au moins deux éléments de tuyaux (110; 112) étant raccordés sur leurs faces frontales (110s, 112s) opposées l'une à l'autre avec les étapes suivantes:
fournir un premier élément de tuyau (110) d'un système (100) selon l'une quelconque des revendications 1 à 5 qui comprend au moins un élément de retenue (114),
fournir un deuxième élément de tuyau (112) d'un système (100) selon l'une quelconque des revendications 1 à 5, qui comprend au moins un guidage à coulisse (116), le deuxième élément de tuyau (112) étant positionné coaxialement au premier élément de tuyau (110) et est disposé de manière à ce que sa face frontale (112s), adjacente à laquelle le guidage à coulisse (116) est formé, devient positionnée opposée à la face frontale (110s) du premier élément de tuyau (110), et
déplacer des éléments de tuyaux (110, 112) dans une direction l'un vers l'autre de manière à ce que l'élément de retenue (114) s'engage de manière positive avec le guidage à coulisse (116) et ainsi se déplace automatiquement à travers la première partie (I), la deuxième partie (II) jusque dans la troisième partie (III) du guidage à coulisse (116),
**caractérisé en ce**
**que**
le premier et la deuxième élément de tuyau (110; 112), après que l'élément de retenue (114) est parvenu dans la troisième partie (III), sont tordus l'un par rapport à l'autre autour de leur axe longitudinal (L) de manière à ce que ainsi l'élément de retenue (114) parvient dans le creux d'enclenchement (120),
une rainure (122) étant formé, lorsque l'élément de retenue (114) est reçu dans le creux d'enclenchement (120), entre les éléments de tuyaux (110, 112), un élément d'écartement (124) étant introduit dans la rainure (122) de manière à ce que l'élément de retenue (114) est ainsi retenu dans le creux d'enclenchement (120) et une torsion des deux éléments de tuyaux (110, 112) l'un par rapport à l'autre autour de leur axe longitudinal (L) est évitée.

7. Procédé selon la revendication 6, **caractérisé en ce que** le premier élément de tuyau (110), avant le raccordement avec le deuxième élément de tuyau (112), est disposé de manière à ce que son axe longitudinal (L) s'étend verticalement et sa face frontale (110s), adjacente à laquelle l'élément de retenue (114) est formé, montre vers le haut, le deuxième élément de tuyau (112) étant disposé de manière à ce qu'il est positionné coaxialement au-dessus du premier élément de tuyau (110) et son axe longitudinal (L) s'étend verticalement, le deuxième élément de tuyau (112) pour le raccordement des deux éléments de tuyaux (110, 112) étant abaissé dans la direction du premier élément de tuyau (110) et ainsi l'élément de retenue (114) étant engagé de manière positive avec le guidage à coulisse (116).

8. Procédé selon la revendication 6 ou 7, **caractérisé en ce que** le premier élément de tuyau (110), avant le raccordement avec le deuxième élément de tuyau (112), est disposé de manière à ce que son axe longitudinal (L) s'étend verticalement et sa face frontale (110s), adjacente à laquelle l'élément de retenue (114) est formé, montre vers le bas, le deuxième élément de tuyau (112) étant disposé de manière à ce qu'il est positionné coaxialement au-dessous du premier élément de tuyau (110) et son axe longitudinal (L) s'étend verticalement, le premier élément de tuyau (110) pour le raccordement des deux éléments de tuyaux (110, 112) étant abaissé dans la direction du deuxième élément de tuyau (112) et ainsi l'élément de retenue (114) étant engagé de manière positive avec le guidage à coulisse (116).

9. Procédé pour détacher un système (100) selon l'une quelconque des revendications 1 à 5, les au moins deux éléments de tuyaux (110; 112) raccordés l'un avec l'autre à leurs faces frontales opposées, étant détachés l'un de l'autre en enlevant l'élément d'écartement (124) de la rainure (122), et ensuite les éléments de tuyaux (110; 112) étant tordus l'un par rapport à l'autre autour de leur axe longitudinal (L) de manière à ce que l'au moins un élément de retenue (114) sera désengagé du creux d'enclenchement (120) et glisse ensuite à travers la troisième partie (III) et la deuxième partie (II) d'au moins un guidage à coulisse (116) jusque dans sa première partie (I), les éléments de tuyaux (110; 112), dès que l'élément de retenue (114) se trouve dans la première partie (I) du guidage à coulisse (116), s'écartant l'un de l'autre axialement de manière à ce que l'élément de retenue (114) passe à l'extérieur à partir de la première partie (I) du guidage à coulisse (116), et ainsi les éléments de tuyaux (110; 112) sont détachés l'un de l'autre.
